Europäisches Patentamt

**European Patent Office**

Office européen des brevets

(19)

(11) Numéro de publication : **0 044 255**
**B1**

(12)

# FASCICULE DE BREVET EUROPÉEN

(45) Date de publication du fascicule du brevet :
30.10.85

(51) Int. Cl.⁴ : **F 16 K 17/14, G 21 K 5/00**

(21) Numéro de dépôt : **81401117.7**

(22) Date de dépôt : **09.07.81**

(54) Conteneur de transport d'éléments combustibles irradiés.

(30) Priorité : **11.07.80 FR 8015740**

(43) Date de publication de la demande :
**20.01.82 Bulletin 82/03**

(45) Mention de la délivrance du brevet :
**30.10.85 Bulletin 85/44**

(84) Etats contractants désignés :
**BE CH DE GB IT LI LU SE**

(56) Documents cités :
**DE-C- 803 506**
**US-A- 1 993 301**
**US-A- 2 062 381**
**US-A- 3 780 306**

(73) Titulaire : **SOCIETE ANONYME DES ETABLISSE-
MENTS LEMER & CIE
Rue de la Fonderie Z.I.
F-44470 Nantes Carquefou (FR)**

(72) Inventeur : **Kerjean, Joel
13, Avenue du Golf
F-44800 Saint Herblain (FR)**

(74) Mandataire : **Mongrédien, André et al
c/o BREVATOME 25, rue de Ponthieu
F-75008 Paris (FR)**

## Description

La présente invention se rapporte à un conteneur de transport d'éléments combustibles irradiés, comportant une paroi de protection biologique lourde contre le rayonnement gamma et une protection neutronique.

On connaît (US-A-3 780 306) un conteneur de transport d'éléments combustibles irradiés de ce type. Selon l'un des modes de réalisation de ce conteneur, celui-ci comporte une enveloppe intérieure, une enveloppe intermédiaire et une enveloppe extérieure, un matériau dense de protection contre le rayonnement gamma étant disposé entre l'enveloppe intérieure et l'enveloppe intermédiaire. Une protection neutronique est assurée par une masse d'un liquide hydrogéné tel que de l'eau. Des ailettes de refroidissement font saillie radialement à partir de l'enveloppe extérieure. Elles permettent d'évacuer la chaleur dégagée par la matière radioactive renfermée dans le conteneur.

En cas d'incendie, l'espace situé entre l'enveloppe intermédiaire et l'enveloppe extérieure, qui est rempli d'eau, assure une absorption de la chaleur grâce à sa capacité calorifique. Cela réduit la température à l'intérieur du conteneur, ce qui accroît sa sécurité. Cependant, malgré la présence de cette masse d'eau, une augmentation importante de la température du conteneur peut se produire si l'incendie dure pendant un certain temps. Il peut en résulter un endommagement du conteneur et des fuites de matières radioactives.

L'invention a pour objet un conteneur de transport d'éléments combustibles irradiés qui remédie à ces inconvénients en permettant une absorption accrue de la chaleur dégagée en cas d'incendie. A cet effet, il comporte une pluralité de capacités fixées sur sa paroi. Chacune de ces capacités comporte, à l'intérieur, une pièce calibrée qui remplit le rôle d'une éprouvette de traction creuse présentant une partie affaiblie, cette pièce calibrée étant reliée à deux parois opposées de la capacité, ces parois étant déplaçables sous l'effet d'une surpression apparaissant dans la capacité, la capacité contenant un liquide remplissant le rôle de protection contre les rayonnements neutroniques. En cas d'incendie extérieur, l'échauffement de la paroi du conteneur de transport se transmet au liquide contenu dans les capacités et, par suite, provoque sa vaporisation, ce qui aboutit à une surpression conduisant à la rupture de l'éprouvette de traction. La rupture de cette éprouvette dégage une ouverture permettant l'échappement du liquide vers la paroi du conteneur de transport, et le refroidissement de celle-ci sous l'effet endothermique de la vaporisation du liquide.

Grâce à ces dispositions, le refroidissement du conteneur est amélioré par rapport aux conteneurs de l'art antérieur. En outre, le dispositif de sécurité de l'invention permet d'éviter un éclatement dangereux des capacités par suite d'un échauffement provenant des conditions climatiques, de la chaleur transmise par les produits transportés, et en cas d'accident ou incendie.

Le dispositif de sécurité calibré faisant partie de l'invention présente en outre un certain nombre d'avantages tels que :

— effort sur la pièce calibrée indépendant de la dimension de celle-ci, mais fonction de la surface et de la rigidité des parois déformables de la capacité ;

— la capacité peut être réalisée par soudure contrôlée et être absolument étanche tout en contenant un fluide approprié à l'utilisation ;

— l'ensemble du dispositif peut être réalisé en un matériau inoxydable afin de réduire l'effet d'agressivité du milieu chimique interne ou externe, et de réaliser la pièce calibrée par usinage ;

— les examens périodiques fréquents ne sont pas obligatoires.

Dans les conditions normales de pression et de température, soit donc en service habituel, la contrainte dans la pièce calibrée reste inférieure à la limite élastique du matériau constituant.

La pièce calibrée peut préférentiellement être un tube usiné avec un affaiblissement local de la section, non obturé à ses deux extrémités ou obturé d'un seul côté.

La pièce calibrée peut aussi être placée à l'intérieur d'un tube assurant la fonction d'étanchéité de la capacité mais qui, seul, n'assurerait pas une tenue mécanique suffisante.

La présente invention est illustrée par les figures ci-jointes parmi lesquelles ;

figure 1 coupe montrant un dispositif de sécurité faisant partie de l'invention avec une pièce calibrée tubulaire fixée aux parois déformables d'une capacité étanche ;

figure 2 coupe de ce même dispositif en surpression après rupture de la pièce calibrée et évacuation du fluide extérieur soit à l'air libre soit vers un réseau de détente approprié ;

figure 3 coupe d'un dispositif avec pièce calibrée assurant la tenue mécanique placée dans un tube qui assure la fonction d'étanchéité de la capacité ;

figure 4 vue d'un conteneur de transport pour produit radioactif conforme à l'invention, montrant la juxtaposition des dispositifs autour de la protection gamma ;

figure 5 schéma montrant l'association du dispositif de sécurité calibré à parois déformables avec un réseau principal ;

figure 6 application variante du dispositif avec pièce calibrée tubulaire reliant d'une part un réservoir principal non déformable à la paroi d'une capacité déformable placée en position fixe dans ce récipient. Une augmentation de pression dans le réservoir provoque l'aplatissement de la capacité, la traction de la pièce calibrée, la rupture de cette pièce et l'évacuation de la surpression vers l'extérieur ;

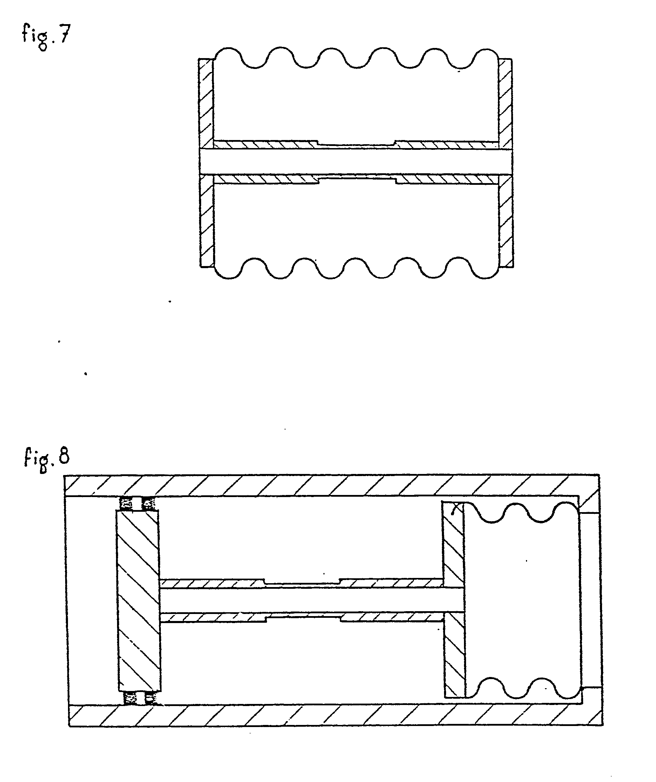

figure 7 coupe d'un dispositif de sécurité constitué par une capacité dont les parois sur lesquelles est fixée la pièce calibrée peuvent s'écarter l'une de l'autre grâce à la déformation des ou d'une autre paroi rendant étanche cette capacité ;

figure 8 coupe d'une application variante, dans laquelle la pièce calibrée est placée entre une paroi fixe et une paroi mobile ou entre deux parois mobiles qui peuvent s'éloigner tout en conservant l'étanchéité à l'intérieur des autres parois fermant cette capacité.

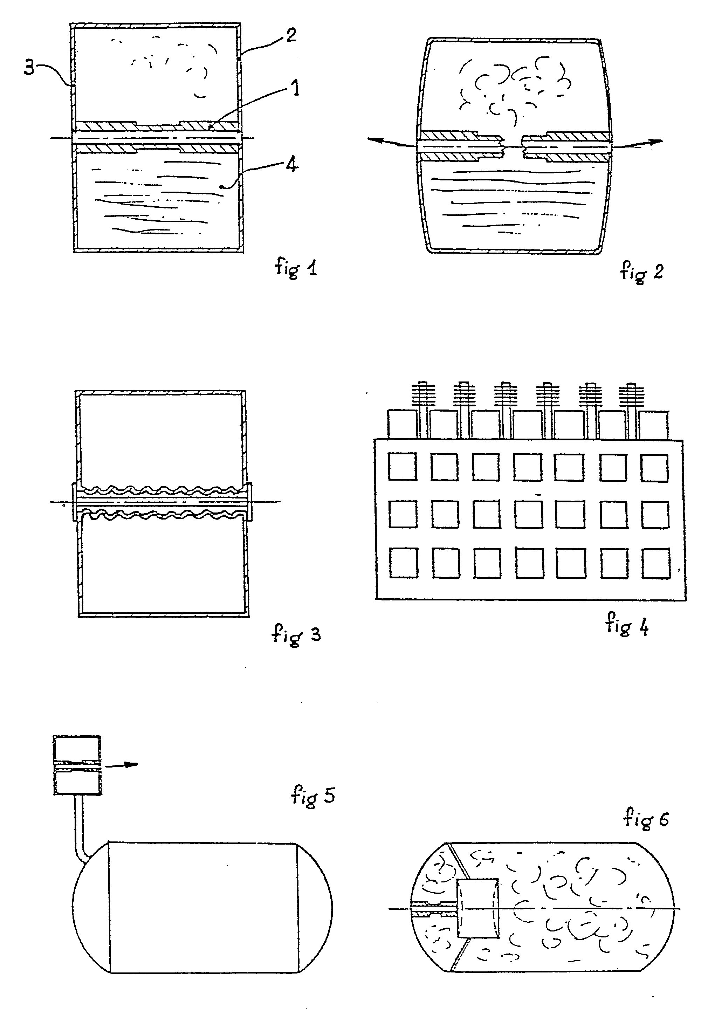

Tel qu'il est représenté sur la fig. 1, le dispositif comporte une pièce calibrée tubulaire 1 fixée étanche sur deux parois 2 et 3 de la capacité contenant un fluide. Sous une action extérieure ou intérieure la surpression produit la rupture de la pièce calibrée et tel que représenté fig. 2 permet par suite l'échappement du fluide par l'intérieur de cette pièce calibrée. Le dispositif peut être utilisé dans tous les cas où la sortie d'un fluide hors d'un récipient doit par sécurité être assurée lorsque la surpression interne atteint une limite prédéterminée.

## Revendication

1. Conteneur de transport d'éléments combustibles irradiés, comportant une paroi de protection biologique lourde contre le rayonnement gamma, caractérisé en ce qu'une pluralité de capacités sont fixées sur la paroi de ce conteneur, chacune de ces capacités comportant, à l'intérieur, une pièce calibrée (1) qui remplit le rôle d'une éprouvette de traction creuse présentant une partie affaiblie, cette pièce calibrée (1) étant reliée à deux parois opposées (2, 3) de la capacité, ces parois (2, 3) étant déplaçables sous l'effet d'une surpression apparaissant dans la capacité, la capacité contenant un liquide remplissant le rôle de protection contre les rayonnements neutroniques, un échauffement de la paroi du conteneur de transport se transmettant au liquide contenu dans les capacités et, par suite, provoquant sa vaporisation, ce qui aboutit à une surpression conduisant à la rupture de l'éprouvette de traction (1), ce qui dégage une ouverture permettant l'échappement du liquide vers la paroi du conteneur de transport, et le refroidissement de celle-ci sous l'effet endothermique de la vaporisation du liquide.

## Claim

1. Transport container for irradiated fuel elements, comprising a thick wall for biological protection against gamma radiation, characterized in that a plurality of tanks are fixed on the wall of said container, each of said tanks having in its interior a calibrated member (1) acting as a hollow safety member having a weakened portion, said calibrated member (1) being connected to two opposed walls (2, 3) of the tank, said walls (2, 3) being displaceable under the effect of excess pressure within the tank, said tank containing a liquid acting as protection against neutron radiation, heating of the wall of the transport container being transmitted to liquid contained within the tanks and thereby vaporizing it, which leads to a pressure increase acting to rupture the safety member (1), thereby uncovering an opening enabling escape of liquid towards the wall of the transport container, and the cooling thereof under the endothermic effect of vaporization of the liquid.

## Patentanspruch

1. Behälter für den Transport von bestrahlten Brennelementen, mit einer schweren Wand für den biologischen Schutz gegen Gammastrahlung, dadurch gekennzeichnet, daß an der wand des Behälters eine Anzahl von Kammern befestigt ist, deren jede in ihrem Inneren ein die Funktion eines hohlen Zerreißstabs mit einer geschwächten Stelle ausübendes kalibriertes Element (1) enthält, daß das kalibrierte Element (1) mit zwei einander gegenüberstehenden Wänden (2, 3) der Kammer verbunden ist, daß die Wände (2, 3) unter Einwirkung eines in der Kammer auftretenden Überdrucks bewegbar sind, daß die Kammer eine Flüssigkeit enthält, welche die Funktion eines Schutzes gegen Neutronenstrahlung ausübt und daß sich eine Erwärmung der Wand des Transportbehälters auf die in den Kammern enthaltene Flüssigkeit überträgt und in der Folge ihre Verdampfung hervorruft, wobei ein dadurch entstehender Überdruck zum Zerreißen des Zerreißstabs (1) führt, wodurch eine Öffnung freigegeben wird, welche das Entweichen der Flüssigkeit in Richtung auf die Wand des Transportbehälters und damit die Kühlung derselben durch den endothermischen Effekt der Verdampfung der Flüssigkeit ermöglicht.

fig 1

fig 2

fig 3

fig 4

fig 5

fig 6

fig. 7

fig. 8